# EUROPEAN PATENT APPLICATION

(11) **EP 4 806 809 A1**
(43) Date of publication of application: **16.09.2026**
(21) Application number: 24905879.3
(22) Date of filing: 04.11.2024
(51) Int. Cl.: B65G 1/04, B65G 1/02

(54) **TRANSFER ROBOT, CONTROL METHOD, AND WAREHOUSING SYSTEM**

(30) Priority: 21.12.2023 CN 202311777045
(71) Applicant: Hai Robotics Co., Ltd., Shenzhen, Guangdong 518000 (CN); Hai Robotics Innovation Group Co., Ltd., Shenzhen, Guangdong 518000 (CN)
(72) Inventor: NING, Kejun, Shenzhen, Guangdong 518000 (CN); XU, Shengdong, Shenzhen, Guangdong 518000 (CN); CHEN, Yuqi, Shenzhen, Guangdong 518000 (CN)
(74) Representative: Gulde & Partner
(86) International application number: PCT/CN2024/129785
(87) International publication number: WO 2025/130391

(57) **Abstract**

This application provides a handling robot, a control method, and a warehousing system. The handling robot includes a first vehicle body and a second vehicle body. The first vehicle body includes a fork assembly, a first docking portion, and a first climbing assembly. The first climbing assembly is configured to climb on a second climbing assembly on a rack in a vertical direction. The second vehicle body includes a second docking portion, a traveling wheel set, and a platform configured to receive goods. The second vehicle body is configured to travel on the ground through the traveling wheel set. The second vehicle body is capable of docking with or being separated from the first vehicle body through cooperation of the second docking portion and the first docking portion. In this application, through cooperation of the first vehicle body and the second vehicle body that are separated from each other, an operation of picking up and placing goods on a rack and an operation of moving goods on the ground can be implemented through the first vehicle body and the second vehicle body respectively, so that energy consumption of the first vehicle body and the second vehicle body during respective actions can be greatly reduced.

## Description

### CROSS-REFERENCES

This application claims priority to Chinese Patent Application No. 202311777045.5, filed with the China National Intellectual Property Administration on December 21, 2023 and entitled "HANDLING ROBOT, CONTROL METHOD, AND WAREHOUSING SYSTEM", which is incorporated herein by reference in its entirety.

### TECHNICAL FIELD

This application relates to the field of logistics and transportation technologies, and in particular, to a handling robot, a control method, and a warehousing system.

### BACKGROUND OF THE INVENTION

A handling robot is one of important components of an automated and intelligent warehousing system. The handling robot may climb on a rack to pick up or place goods. However, an existing handling robot has an integrated structure, and when implementing some different functions, an entire robot needs to operate as a whole, which has high energy consumption.

### SUMMARY OF THE INVENTION

An objective of this application is to provide a handling robot, a control method, and a warehousing system, so that parts on the handling robot that can implement different functions may be separated from an entire robot and then operate independently, thereby reducing energy consumption.

According to a first aspect of this application, a handling robot is provided, including:
a first vehicle body, where the first vehicle body includes a fork assembly, a first docking portion, and a first climbing assembly, and the first climbing assembly is configured to climb on a second climbing assembly on a rack in a vertical direction; and the first vehicle body is capable of transferring goods between the first vehicle body and a second vehicle body through the fork assembly; and
the second vehicle body, including a second docking portion, a traveling wheel set, and a platform configured to receive goods, where the second vehicle body is configured to travel on the ground through the traveling wheel set, and the second vehicle body is capable of docking with or being separated from the first vehicle body through cooperation of the second docking portion and the first docking portion.

A second aspect of this application further provides a handling robot control method. The handling robot is the handling robot provided in the first aspect of this application, and the method includes:
controlling a second vehicle body to travel on the ground to a first docking position below a to-be-docked first vehicle body;
controlling a first vehicle body to travel to a second docking position on a rack, to enable the first docking portion of the first vehicle body to cooperate with the second docking portion of the second vehicle body, and controlling a first climbing assembly of the first vehicle body to separate from a second climbing assembly of the rack; and
controlling the second vehicle body to carry the first vehicle body to move on the ground to the second climbing assembly corresponding to a next place for executing a task of picking up or placing goods, to enable the first vehicle body to cooperate with the corresponding second climbing assembly.

A third aspect of this application further provides a handling robot control method. The handling robot is the handling robot provided in the first aspect of this application, and the method includes:
controlling the second vehicle body to travel on the ground to a first handover position corresponding to a lower part of a racking column in which the first vehicle body is located;
controlling the first vehicle body to travel to a second handover position on the rack, where projections of the first handover position and the second handover position on the ground do not overlap, and at the second handover position, a goods supporting surface of the fork assembly of the first vehicle body highly matches a goods supporting surface of the platform of the second vehicle body, where the platform is configured to receive goods; and
controlling the fork assembly to transfer goods from the first vehicle body to the second vehicle body, or controlling the fork assembly to transfer goods from the second vehicle body to the first vehicle body.

A fourth aspect of this application further provides a warehousing system, including a rack and the same handling robot according to the first aspect of this application. The rack is provided with a second climbing assembly, and the second climbing assembly is configured to cooperate with the first climbing assembly of the handling robot, to enable the first vehicle body to climb on the rack in a vertical direction.

The technical solutions provided in this application can achieve the following beneficial effects:
According to the handling robot, the control method, and the warehousing system provided in this application, through cooperation of the first vehicle body and the second vehicle body that are separated from each other, an operation of picking up and placing goods on the rack and an operation of moving goods on the ground may be implemented through the first vehicle body and the second vehicle body respectively. In other words, when the first vehicle body picks up and places goods on the rack, the second vehicle body does not need to be carried to synchronously move on the rack, and when the second vehicle body moves goods on the ground, the first vehicle body does not need to be carried to synchronously move on the ground. In this way, energy consumption of the first vehicle body and the second vehicle body during respective actions can be greatly reduced.

It is to be understood that the foregoing general descriptions and the following detailed descriptions are merely examples, and are not intended to limit this application.

### BRIEF DESCRIPTION OF DRAWINGS

FIG. 1 is a schematic diagram of a working scenario of a warehousing system according to an embodiment of this application;
FIG. 2 is a schematic structural diagram of a first vehicle body according to an embodiment of this application;
FIG. 3 is a schematic structural diagram of a second vehicle body according to an embodiment of this application;
FIG. 4 is a schematic diagram of a second vehicle body before moving to a goods handover position with a first vehicle body;
FIG. 5 is a schematic diagram of a second vehicle body when moving to a goods handover position with a first vehicle body;
FIG. 6 is a schematic diagram of a first vehicle body after transferring goods to a second vehicle body;
FIG. 7 is a schematic diagram of a second vehicle body carries moving of goods;
FIG. 8 is a schematic diagram of a second vehicle body moving to a docking position with a first vehicle body;
FIG. 9 is a schematic diagram of a first vehicle body when the first vehicle body docks with a second vehicle body;
FIG. 10 is a schematic diagram when a second vehicle body drives a first vehicle body to separate from a rack;
FIG. 11 is a schematic diagram when a second vehicle body carries a first vehicle body to move;
FIG. 12 is a partial enlarged view of cooperation between a first climbing assembly and a second climbing assembly; and
FIG. 13 is a schematic diagram of a second vehicle body carrying an object passing through an aisle.

In the drawings:
1-First vehicle body;
11-First climbing assembly;
111-Chain wheel;
112-First transmission wheel;
113-Second transmission wheel;
114-Transmission belt;
115-Support arm;
12-Bottom base;
13-Fork assembly;
2-Second vehicle body;
21-Traveling wheel set;
22-Chassis assembly;
23-Platform;
231-Movable portion;
232-Support portion;
232a-Bottom plate;
232b-Side plate;
3-Rack;
31-Second climbing assembly;
311-Chain;
32-Channel;
33-Support column; and
4-Tote.

### DETAILED DESCRIPTION

To make the objectives, technical solutions, and advantages of this application clearer, this application is described in further detail in combination with accompanying drawings and embodiments. It is to be understood that specific embodiments described herein are merely used to explain this application rather than limiting this application.

In descriptions of this application, unless otherwise expressly specified and limited, the terms "first" and "second" are merely intended for a purpose of description, and shall not be understood as an indication or implication of relative importance. Unless otherwise specified or stated, the term "a plurality of" means two or more. The terms "connected", "fixed", and the like are all to be understood in a broad sense. For example, "connected" may be a fixed connection, a detachable connection, an integrated connection, or an electrical connection; or may be a direct connection, or an indirect connection through an intermediate medium. A person of ordinary skill in the art can understand specific meanings of the foregoing terms in this application according to specific situations.

In the descriptions of this specification, it is to be understood that, in the embodiments of this application, orientation terms such as "upper" and "lower" are described from a perspective shown in the accompanying drawings, and shall not be construed as a limitation on the embodiments of this application. In addition, in the context, it is to be further understood that, when it is mentioned that an element is connected "on" or "under" another element, the element can be not only directly connected "on" or "under" another element, but also may be indirectly connected "on" or "under" another element through an intermediate element.

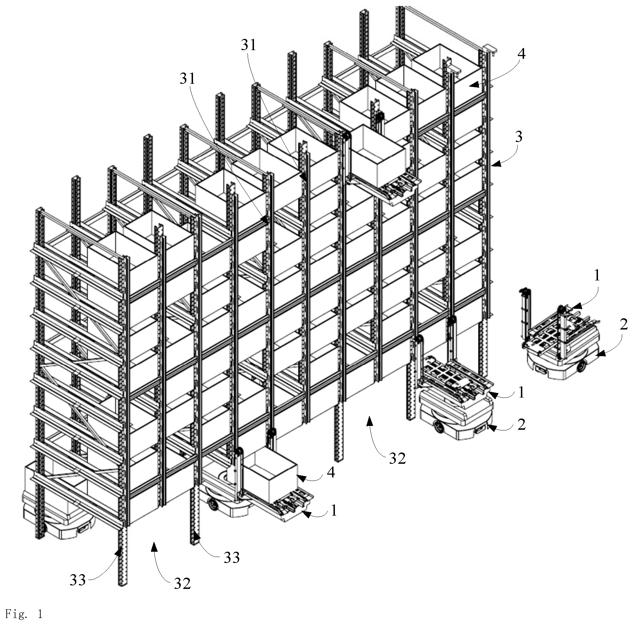

An embodiment of this application provides a handling robot. FIG. 1 is a schematic structural diagram of a warehousing system according to an embodiment of this application. Referring to FIG. 1, the handling robot may be applied to the warehousing system. Specifically, the handling robot includes two parts, that is, includes a first vehicle body 1 and a second vehicle body 2. The first vehicle body 1 and the second vehicle body 2 may be formed as a whole through docking, or may be separated to independently move. The second vehicle body 2 may be configured to temporarily store a tote 4, or may move on the ground to transfer a tote 4. The first vehicle body 1 may climb on a rack 3 to pick up or place the tote 4. In addition, the first vehicle body 1 may further configured to pick up the tote 4 from the second vehicle body 2, or place the tote 4 on the second vehicle body 2.

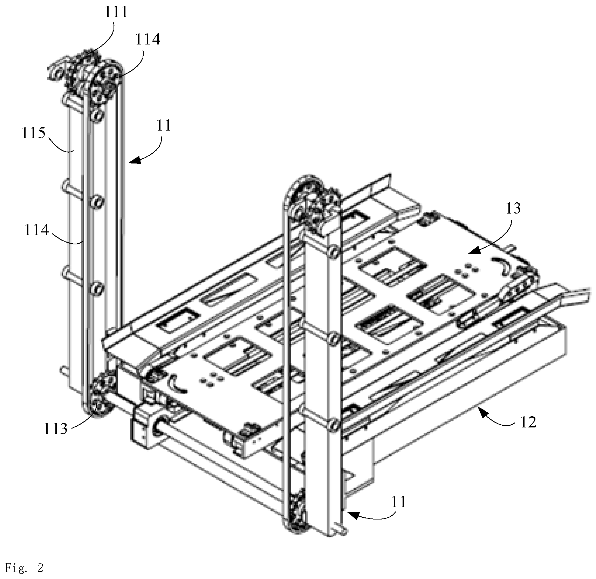

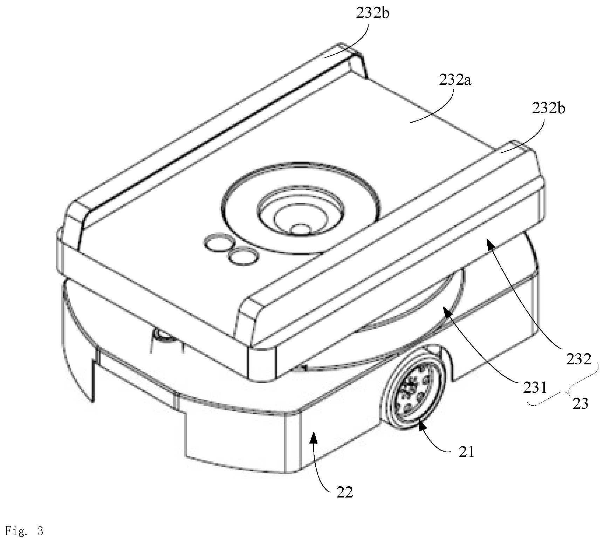

Specifically, referring to FIG. 2, the first vehicle body 1 includes a first docking portion (not shown in the figure) and a first climbing assembly 11. The first climbing assembly 11 is configured to climb on a second climbing assembly 31 on the rack 3 in a vertical direction. Referring to FIG. 3, the second vehicle body 2 includes a second docking portion (not shown in the figure) and a traveling wheel set 21. The second vehicle body 2 is configured to travel on the ground through the traveling wheel set 21, and the second vehicle body 2 is configured to dock with or be separated from the first vehicle body 1 through cooperation of the second docking portion and the first docking portion.

The first docking portion and the second docking portion may have a plurality forms. For example, the first docking portion and the second docking portion may be in a form of cooperation of a pin and a pin hole, or may be in a form of mutual snap-fit, or certainly may be in another manner in which the first docking portion can dock with or be separated from the second docking portion. This is not limited in this embodiment.

For example, an operation of picking up goods from the rack 3 may be performed according to the following operations.

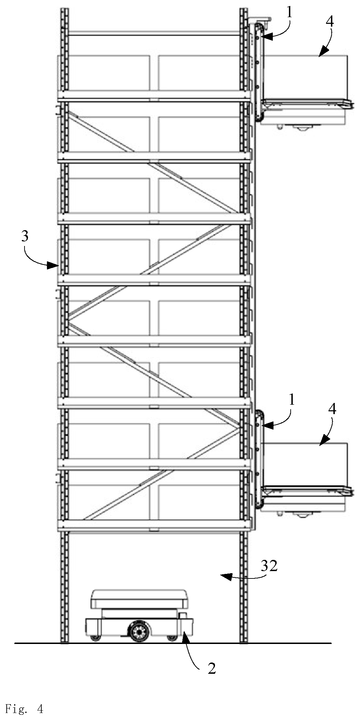

Operation 1: Referring to FIG. 4, a first vehicle body 1 moves to a corresponding goods position on a rack 3 through cooperation of a first climbing assembly 11 and a second climbing assembly 31, and picks up goods on the first vehicle body 1. In addition, a second vehicle body 2 may move on the ground to a position capable of docking with the first vehicle body 1.

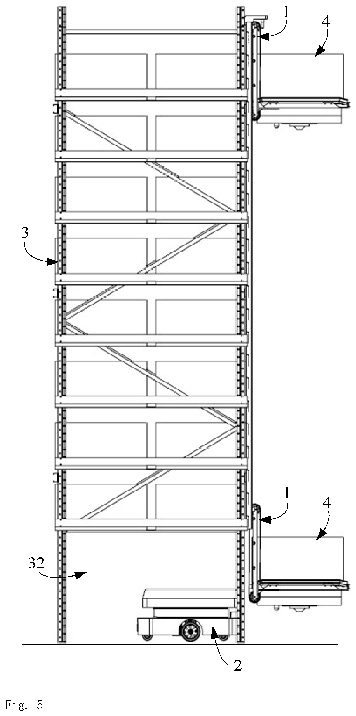

Operation 2: Referring to FIG. 5, the first vehicle body 1 carries goods and moves down the rack 3 to a goods handover position, and the second vehicle body 2 moves on the ground to the goods handover position. Specifically, the first vehicle body 1 is located at a first handover position, the second vehicle body 2 is located at a second handover position, and projections of the first handover position and the second handover position on the ground do not overlap. The goods handover position may be a position in which the first vehicle body 1 can transfer goods to the second vehicle body 2, or may be a position in which goods is picked up from the second vehicle body 2. At the goods handover position, a goods supporting surface of a fork assembly 13 of the first vehicle body 1 is highly matched with a goods supporting surface of a platform 23 of the second vehicle body 2. The platform 23 is configured to carry goods. Specifically, matching does not mean that the two are completely at a same level, as long as goods handover between the two vehicle bodies can be completed.

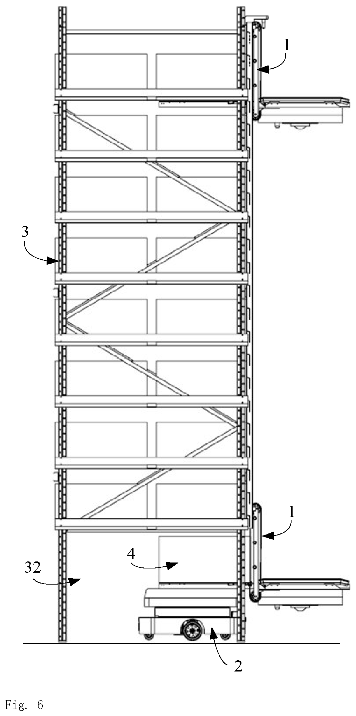

Operation 3: Referring to FIG. 6, after both the first vehicle body 1 and the second vehicle body 2 reach the goods handover position, the first vehicle body 1 may transfer goods to the second vehicle body 2.

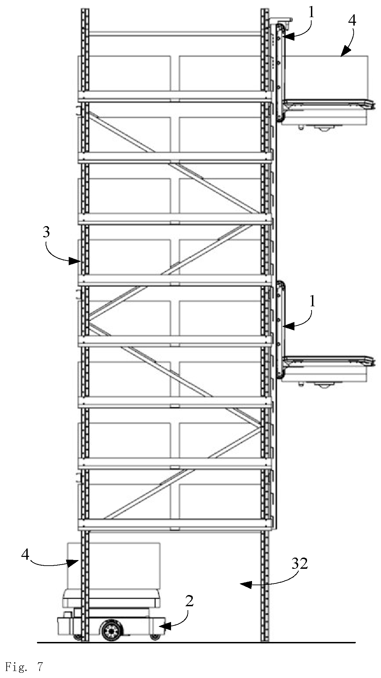

Operation 4: Referring to FIG. 7, the second vehicle body 2 may move with goods carried on. In addition, the first vehicle body 1 may be ascended along the rack 3. For example, the first vehicle body 1 may be ascended to a position of to-be-picked-up goods, or may be ascended to a top of the rack 3 for charging or standby.

In addition, an operation of placing goods on the rack 3 is opposite to the foregoing operation of picking up goods. Details are not described herein again.

According to the handling robot provided in this embodiment of this application, through cooperation of the first vehicle body 1 and the second vehicle body 2 separated from each other, an operation of picking up or placing goods on the rack 3, and an operation of moving goods on the ground may be implemented through the first vehicle body 1 and the second vehicle body 2 respectively. In other words, when the first vehicle body 1 picks up or places goods on the rack 3, the second vehicle body 2 does not need to be carried to synchronously move on the rack 3, and when the second vehicle body 2 moves goods on the ground, the first vehicle body 1 also does not need to be carried to synchronously move on the ground. In this way, energy consumption of the first vehicle body 1 and the second vehicle body 2 during respective actions can be greatly reduced.

In addition, there may be a plurality of second climbing assemblies 31 on the rack 3. The first climbing assembly 11 of the first vehicle body 1 can cooperate with any second climbing assembly 31. Specifically, switching may be performed between the second climbing assemblies 31 through the second vehicle body 2. For example, switching may be performed according to the following operations.

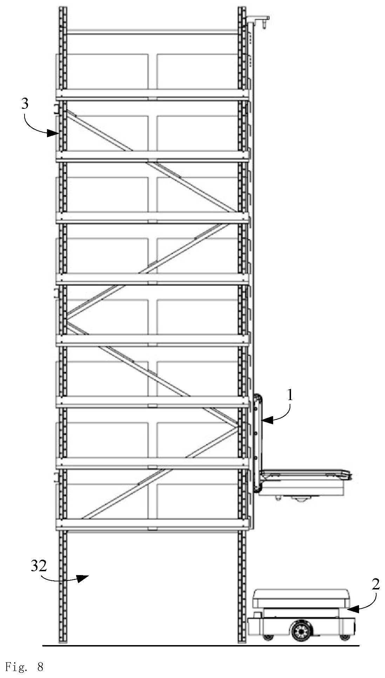

Operation 1: Referring to FIG. 8, a second vehicle body 2 travels on the ground to a first docking position below a corresponding first vehicle body 1. Specifically, the first docking position is a position on the ground right below the first vehicle body 1.

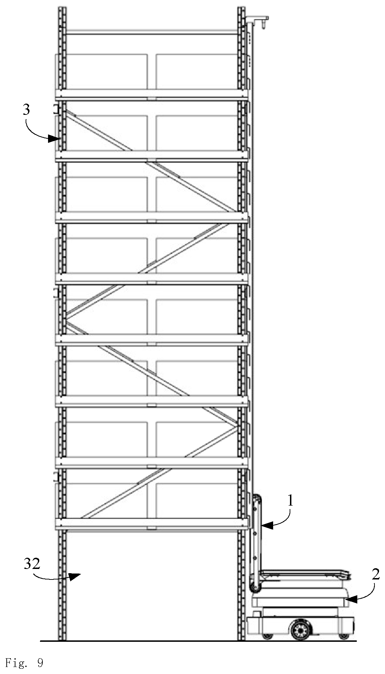

Operation 2: Referring to FIG. 9, the first vehicle body 1 descends to a second docking position on the rack, to enable the first docking portion of the first vehicle body 1 to cooperate with the second docking portion of the second vehicle body 2.

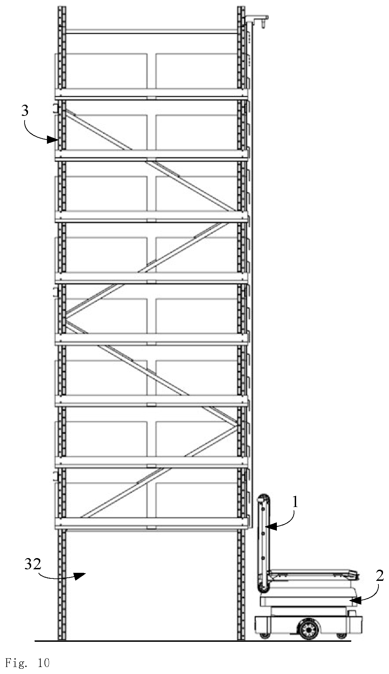

Operation 3: Referring to FIG. 10, the second vehicle body 2 drives the first vehicle body 1 to move away from a rack 3, to enable a first climbing assembly 11 to be separated from a second climbing assembly 31.

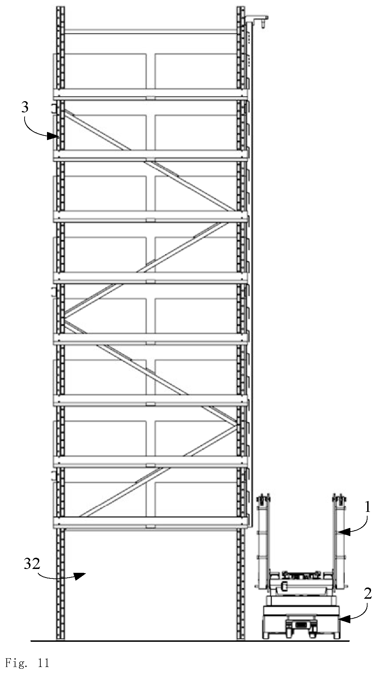

Operation 4: Referring to FIG. 11, the second vehicle body 2 carries the first vehicle body 1 to move on the ground, to drive the first vehicle body 1 to cooperate with the second climbing assembly 31 corresponding to execution of a task of picking up or placing goods, to implement switching of the second climbing assemblies 31.

Therefore, the second vehicle body 2 can carry both goods and the first vehicle body 1, switching on the first vehicle body 1 between the second climbing assemblies 31 is implemented, and a range in which the first vehicle body 1 picks up or places goods on the rack 3 is expanded. In addition, the first vehicle body 1 can dock with the rack 3 in the air through a function of the second vehicle body 2, so that a space at the bottom of the rack 3 can be released, which facilitates the second vehicle body 2 to travel on the bottom of the rack 3, thereby shortening a traveling distance of the second vehicle body 2 on two sides of the rack 3 and improving carrying efficiency.

It should be noted that, the first vehicle body 1 and the second vehicle body 2 may both be uniformly scheduled through a management system, or the first vehicle body 1 and the second vehicle body 2 may implement movement such as docking and separation through near field wireless communication, the second vehicle body 2 may also control movement of the first vehicle body 1 on the rack 3 through near field wireless communication, and the first vehicle body 1 and the second vehicle body 2 may also be respectively scheduled by different controllers.

In a specific implementation, referring to FIG. 3, the second vehicle body 2 includes the platform 23, a chassis assembly 22, a first drive, and a second drive. The first drive is connected to the platform 23 and is configured to control the platform 23 to rotate relative to the chassis assembly 22, or the platform 23 and is configured to control the platform 23 to ascend or descend relative to the chassis assembly 22. The second docking portion is connected to the platform 23, and the first vehicle body 1 is capable of being supported on the platform 23 through cooperation of the first docking portion and the second docking portion. The traveling wheel set 21 is disposed on the chassis assembly 22, and the second drive is connected to the traveling wheel set 21 and is configured to control the traveling wheel set 21 to go straight, or to control the traveling wheel set 21 to steer to drive the chassis assembly 22 to rotate.

The platform 23 is located above the chassis assembly 22. The chassis assembly 22 may be integrated with a plurality of devices, and can further support the platform 23, goods, the first vehicle body 1, and the like located above the chassis assembly 22. The traveling wheel set 21 is disposed on a bottom of the chassis assembly 22, and the second vehicle body 2 can go straight or steer on the ground through the traveling wheel set 21.

When the first drive is activated, the first drive may control the platform 23 to independently rotate relative to the chassis assembly 22, or control the platform 23 to ascend or descend relative to the chassis assembly 22. When the second drive is activated, the second drive may control the traveling wheel set 21 to go straight or steer, to drive the chassis assembly 22 to go straight or rotate relative to the ground. Certainly, when both the first drive and the second drive are activated, both the platform 23 and the chassis assembly 22 can independently move, that is, the chassis assembly 22 can move relative to the ground, and the platform 23 assembly can not only move with the chassis assembly 22, but also rotate or ascend or descend relative to the chassis assembly 22.

In a case that the tote 4 above the platform 23 has large size, for example, when the tote 4 is a cuboid, the tote 4 has a long side and a wide side. When a size of the long side is greater than a maximum contour size of the chassis assembly 22, an edge portion of the tote 4 protrudes from an edge of the chassis assembly 22. When the second vehicle body 2 needs to steer, the second drive may control the traveling wheel set 21 to steer, thereby driving the chassis assembly 22 to rotate relative to the ground, to adjust a traveling direction. In this case, if the platform 23 does not rotate relative to the chassis assembly 22, the chassis assembly 22 drives the platform 23 to synchronously rotate, to further drive the tote 4 to synchronously rotate. Because the tote 4 is generally rectangular, the tote 4 occupies a large steering space during rotation with the chassis assembly 22, which is easily to cause interference and collision with an object in a surrounding environment.

Therefore, in this embodiment, during rotation of the chassis assembly 22 controlled by the second drive, the first drive may also control the platform 23 to rotate in an opposite direction relative to the chassis assembly 22 by a same angle, that is, a rotation direction of the platform 23 is opposite to a rotation direction of the chassis assembly 22. In this way, the traveling direction of the chassis assembly 22 may be adjusted relative to the ground, and the platform 23 and the ground may be kept static relative to each other. Therefore, when the traveling direction of the second vehicle body 2 is adjusted, the tote 4 does not rotate accordingly, thereby avoiding interference caused by a large space occupied during rotation of the tote 4. For ease of assembly and control, both the first drive and the second drive may be motors.

Optionally, the platform 23 may be further ascended or descended relative to the chassis assembly 22, which can facilitate the platform 23 to dock with another mechanism to receive goods or transfer goods, and facilitate picking up by personnel or robots when carrying goods.

In a specific implementation, referring to FIG. 3, the platform 23 includes a movable portion 231 and a support portion 232, the movable portion 231 is connected to the first drive, and the movable portion 231 rotates or ascends or descends relative to the chassis assembly 22 through control of the first drive; and the support portion 232 is connected to the movable portion 231 for supporting the first vehicle body 1.

The support portion 232 is disposed above the movable portion 231, and can synchronously move with the movable portion 231, that is, when the movable portion 231 rotates or ascends or descends, the support portion 232 can synchronously rotate or ascend or descend with a rotating portion 231. The support portion 232 may provide a large support area for supporting goods or the first vehicle body 1, which ensures stability of supporting goods or the first vehicle body 1. A specific shape and structure of the support portion 232 may not be limited, as long as the support portion 232 can implement a function of supporting goods.

In a specific implementation, referring to FIG. 3, the support portion 232 includes a bottom plate 232a and a side plate 232b. The side plate 232b is disposed on a side edge of the bottom plate 232a and protrudes from a surface of the bottom plate 232a in a thickness direction of the bottom plate 232a.

Two, three, or more side plates 232b may be provided. The side plate 232b can protrude from the surface of the bottom plate 232a, so that a space is formed between the side plate 232b and the bottom plate 232a, and goods or the first vehicle body 1 can be placed in the space. The goods can be limited through the side plate 232b, and stability of the goods or the first vehicle body 1 on the support portion 232 can be ensured.

In a specific implementation, the first climbing assembly 11 includes a third drive, a transmission mechanism, and a first engaging mechanism. Two ends of the transmission mechanism are respectively in transmission connection with the third drive and the first engaging mechanism. The third drive is configured to control, through the transmission mechanism, the first engaging mechanism to move, and the first engaging mechanism is configured to be engaged with the second climbing assembly 31, so that the first vehicle body 1 climbs on the rack 3.

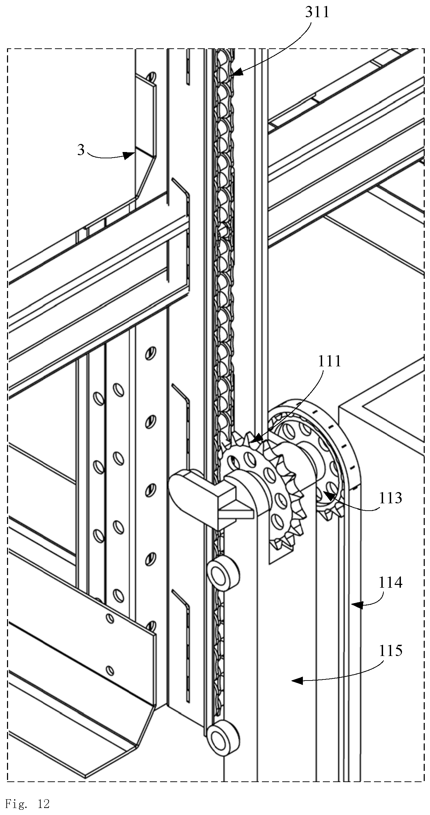

The transmission mechanism has a specific height in a vertical direction, so that stability of the first vehicle body 1 when climbing on the rack 3 can be improved. For example, referring to FIG. 2, the first engaging mechanism includes a chain wheel 111. The chain wheel 111 can cooperate with the second climbing assembly 31 on the rack 3, and can drive the first vehicle body 1 to climb on the rack 3 as a whole. The chain wheel 111 has a plurality of teeth. To enable the second climbing assembly to cooperate with the chain wheel 111, for example, referring to FIG. 12, the second climbing assembly 31 may be a toothed rack or a chain 311, so that the second climbing assembly 31 can be engaged with the teeth of the chain wheel 111. When the chain wheel 111 is driven to rotate, the chain wheel 111 may ascend or descend along the toothed rack or the chain 311. In addition, for ease of driving, the third drive may be a motor.

In a specific implementation, the first engaging mechanism includes a synchronous belt, a plurality of protrusions are disposed on the synchronous belt, and the synchronous belt is engaged with the second climbing assembly 31 through the plurality of protrusions, so that the first vehicle body 1 climbs on the rack 3 in the vertical direction. The second climbing assembly 31 includes a rail. The rail may be mounted on a longitudinal beam of the rack 3 and can extend in the vertical direction. In the vertical direction, a plurality of grooves are provided on the rail, and the grooves can cooperate with the protrusions on the synchronous belt in the handling robot, so that the first vehicle body 1 climbs on the rack 3 in the vertical direction.

In a specific implementation, referring to FIG. 2, the transmission mechanism includes a first transmission wheel 112, a second transmission wheel 113, and a transmission belt 114, the first transmission wheel 112 is coaxially connected to a drive shaft of the third drive, the second transmission wheel 113 is coaxially connected to the chain wheel 111, and the first transmission wheel 112 and the second transmission wheel 113 are in transmission connection through the transmission belt 114.

The first transmission wheel 112 and the second transmission wheel 113 may be respectively located at two ends of the transmission mechanism in the vertical direction. Two ends of the transmission belt 114 may be disposed around the first transmission wheel 112 and the second transmission wheel 113, and teeth on an inner side of the transmission belt 114 may be engaged with the first transmission wheel 112 and the second transmission wheel 113 respectively. When the first drive controls the first transmission wheel 112 to rotate, rotation movement of the first transmission wheel 112 may be transmitted to the second transmission wheel 113 through the transmission belt 114, so that the second transmission wheel 113 synchronously rotates. In addition, because the second transmission wheel 113 is coaxially connected to the chain wheel 111, the second transmission wheel 113 may drive the chain wheel 111 to synchronously rotate, thereby implementing climbing of the first vehicle body 1 on the rack 3 through cooperation of the chain wheel 111 and the second climbing assembly 31.

In a specific implementation, referring to FIG. 2, the first climbing assembly 11 further includes a support arm 115, and the chain wheel 111 is rotatably disposed on one end of the support arm 115 away from the vehicle body. The support arm 115 can improve structural reliability of the first climbing assembly 11, which ensures reliable movement of the first vehicle body 1 on the rack 3.

In a specific implementation, referring to FIG. 2, the first vehicle body 1 further includes a base 12 and a fork assembly 13, and the fork assembly 13 and the first climbing assembly 11 are both disposed on the base 12. The base 12 is configured to support the first climbing assembly 11 and the fork assembly 13, which can ensure reliability of an entire structure of the first vehicle body 1. The first vehicle body 1 may pick up and place materials through the fork assembly 13.

An embodiment of this application further provides a rack 3. Referring to FIG. 1, the rack 3 is provided with a second climbing assembly 31. The second climbing assembly 31 is configured to cooperate with the first climbing assembly 11 in the first vehicle body 1, so that the first vehicle body 1 climbs on the rack 3 in the vertical direction.

According to the rack 3 provided in this embodiment, aerial docking between the first vehicle body 1 and the rack 3 can be implemented, so that a space at the bottom of the rack 3 can be released, and the second vehicle body 2 can travel on the bottom of the rack 3, thereby shortening a traveling distance of the second vehicle body 2 between two sides of the rack 3 and improving carrying efficiency.

In a specific implementation, the second climbing assembly 31 includes a second engaging mechanism, and the second engaging mechanism is configured to be engaged with the first engaging mechanism in the first vehicle body 1, so that the first vehicle body 1 climbs on the rack 3 in the vertical direction.

The second engaging mechanism may have a plurality of structural forms. For example, referring to FIG. 12, the second engaging mechanism is the chain 311. The chain 311 may be directly or indirectly connected to the rack 3. The chain 311 is configured to cooperate with the chain wheel 111 in the first climbing assembly 11, so that the first vehicle body 1 climbs on the chain 311.

Through cooperation of the chain 311 and the chain wheel 111, stability of climbing of the first vehicle body 1 on the rack 3 can be ensured, assembly and maintenance of the chain 311 and the chain wheel 111 are facilitated, and costs are reduced.

Certainly, in some other embodiments, the second engaging mechanism may not use the chain 311, for example, climbing of the first vehicle body 1 may also be implemented by cooperation of the toothed rack and the chain wheel 111.

In a specific implementation, referring to FIG. 1, a channel 32 for the second vehicle body 2 to travel is disposed on the bottom of the rack 3, and the second climbing assembly 31 is located above the channel 32.

The second climbing assembly 31 is disposed above the channel 32, to implement aerial docking between the first vehicle body 1 and the rack 3, so that a space at the bottom of the rack 3 can be released, and the channel 32 can be disposed on the bottom of the rack 3. In this way, the second vehicle body 2 can travel in the channel 32, thereby shortening a traveling distance of the second vehicle body 2 between two sides of the rack 3 and improving carrying efficiency.

In a specific implementation, referring to FIG. 1, a plurality of support columns 33 are further disposed on the bottom of the rack 3, the channel 32 is formed between the support columns 33, and a distance between two adjacent support columns 33 is greater than a maximum length dimension of the second vehicle body 2 in a horizontal direction.

The support column 33 can support the entire rack 3. Because climbing between the first vehicle body 1 and the rack 3 can be implemented through aerial docking, a distance between the support columns 33 at the bottom of the rack 3 may be widened, that is, a distance between two adjacent support columns 33 may be greater than a length of the second body, so that a space at the bottom of the rack can form the channel 32 for the second vehicle body 2 to pass through, thereby shortening a traveling distance of the second vehicle body 2 between two sides of the rack 3, and improving transferring efficiency of goods.

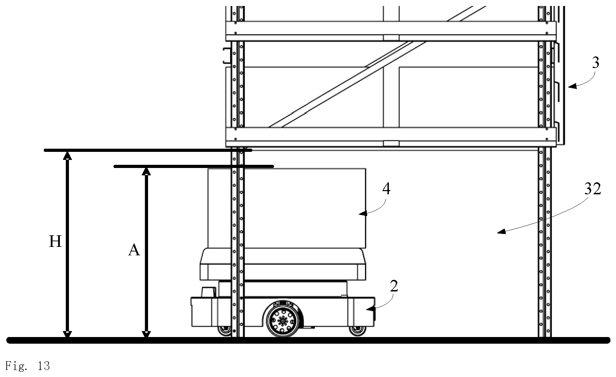

Specifically, referring to FIG. 13, in a case that the second vehicle body 2 carries an object, a height H of the channel 32 is greater than a sum A of heights of the second vehicle body 2 and the object. The object may be the tote 4 or the first vehicle body 1. Therefore, it is can be implemented that the object carried in the second vehicle body 2 passes through the channel 32, and the carried object is prevented from interfering with the rack 3 above the channel 32.

The foregoing descriptions are merely preferred embodiments of this application and are not intended to limit this application. For a person skilled in the art, various modifications and changes may be made to this application. Any modification, equivalent replacements, improvements, and the like made within the spirit and principles of this application shall be included in the scope of protection of this application.

## Claims

1. A handling robot, comprising:
a first vehicle body (1) comprising a fork assembly (13), a first docking portion, and a first climbing assembly (11), wherein the first climbing assembly (11) is configured to climb on a second climbing assembly (31) on a rack (3) in a vertical direction, and the first vehicle body (1) is capable of transferring goods between the first vehicle body (1) and a second vehicle body (2) through the fork assembly (13); and
the second vehicle body (2) comprising a second docking portion, a traveling wheel set (21), and a platform (23) configured to receive goods, wherein the second vehicle body (2) is configured to travel on the ground through the traveling wheel set (21), and the second vehicle body (2) is capable of docking with or being separated from the first vehicle body (1) through cooperation of the second docking portion and the first docking portion.

2. The handling robot according to claim 1, wherein the second vehicle body (2) further comprises a chassis assembly (22), a first drive, and a second drive;
wherein the first drive is connected to the platform (23), and the first drive is configured to control the platform (23) to rotate relative to the chassis assembly (22), or control the platform (23) to ascend or descend relative to the chassis assembly (22), the second docking portion is connected to the platform (23), and the first vehicle body (1) is capable of being supported on the platform (23) through cooperation of the first docking portion and the second docking portion; and
wherein the traveling wheel set (21) is disposed on the chassis assembly (22), the second drive is connected to the traveling wheel set (21), and the second drive is configured to control the traveling wheel set (21) to go straight or, the second drive is configured to control the traveling wheel set (21) to steer to drive the chassis assembly (22) to rotate.

3. The handling robot according to claim 2, wherein the platform (23) comprises a movable portion (231) and a support portion (232), the movable portion (231) is connected to the first drive, and the movable portion (231) is configured to rotate relative to the chassis assembly (22) through control of the first drive, or the movable portion (231) is configured to ascend and descend relative to the chassis assembly (22) through control of the first drive; and
wherein the support portion (232) is connected to the movable portion (231), and the support portion (232) is configured to support the first vehicle body (1) or goods.

4. The handling robot according to claim 3, wherein the support portion (232) comprises a bottom plate (232a) and a side plate (232b), and the side plate (232b) is disposed on a side edge of the bottom plate (232a) and protrudes from a surface of the bottom plate (232a) in a thickness direction of the bottom plate (232a).

5. The handling robot according to claim 1, wherein the first climbing assembly (11) comprises a third drive, a transmission mechanism, and a first engaging mechanism, two ends of the transmission mechanism are respectively in transmission connection with the third drive and the first engaging mechanism, the third drive is configured to control, through the transmission mechanism, movement of the first engaging mechanism, and the first engaging mechanism is configured to be engaged with the second climbing assembly (31).

6. The handling robot according to claim 5, wherein the first engaging mechanism comprises a chain wheel (111), and the chain wheel (111) is configured to be engaged with the second climbing assembly (31).

7. The handling robot according to claim 6, wherein the transmission mechanism comprises a first transmission wheel (112), a second transmission wheel (113), and a transmission belt (114), the first transmission wheel (112) is coaxially connected to a drive shaft of the third drive, the second transmission wheel (113) is coaxially connected to the chain wheel (111), and the first transmission wheel (112) and the second transmission wheel (113) are in transmission connection through the transmission belt (114).

8. A handling robot control method, wherein the handling robot is the handling robot according to any one of claims 1 to 7, and the method comprises:
controlling the second vehicle body (2) to travel on the ground to a first docking position below a to-be-docked first vehicle body (1);
controlling the first vehicle body (1) to travel to a second docking position on the rack (3), to enable the first docking portion of the first vehicle body (1) to cooperate with the second docking portion of the second vehicle body (2), and controlling the first climbing assembly of the first vehicle body (1) to separate from the second climbing assembly of the rack; and
controlling the second vehicle body (2) to carry the first vehicle body (1) to move on the ground to the second climbing assembly corresponding to a next place for executing a task of picking up or placing goods, to enable the first vehicle body (1) to cooperate with the corresponding second climbing assembly.

9. A handling robot control method, wherein the handling robot is the handling robot according to any one of claims 1 to 7, and the method comprises:
controlling the second vehicle body (2) to travel on the ground to a first handover position corresponding to a lower part of a racking column in which the first vehicle body (1) is located;
controlling the first vehicle body (1) to travel to a second handover position on a rack (3), wherein projections of the first handover position and the second handover position on the ground do not overlap, and at the second handover position, a goods supporting surface of the fork assembly (13) of the first vehicle body (1) highly matches a goods supporting surface of a platform (23) of the second vehicle body (2), wherein the platform (23) is configured to receive goods; and
controlling the fork assembly (13) to transfer goods from the first vehicle body (1) to the second vehicle body (2), or controlling the fork assembly (13) to transfer goods from the second vehicle body (2) to the first vehicle body (1).

10. A warehousing system, comprising a rack (3) and the handling robot according to any one of claims 1 to 7, wherein the rack (3) is provided with a second climbing assembly (31), and the second climbing assembly (31) is configured to cooperate with the first climbing assembly (11) of the handling robot, to enable the first vehicle body (1) to climb on the rack (3) in a vertical direction.
